(19) Europäisches Patentamt
European Patent Office
Office européen des brevets

(11) **EP 2 470 764 B1**

(12) **EUROPEAN PATENT SPECIFICATION**

(45) Date of publication and mention
of the grant of the patent:
**16.12.2015 Bulletin 2015/51**

(51) Int Cl.:
*F02M 31/20* (2006.01)    *F02M 33/08* (2006.01)
*F02M 51/06* (2006.01)    *F02M 53/04* (2006.01)
*F02M 57/00* (2006.01)    *F02M 57/06* (2006.01)
*F02M 61/12* (2006.01)    *F02M 61/16* (2006.01)
*F02M 61/18* (2006.01)    *C03C 10/00* (2006.01)
*F01N 5/02* (2006.01)    *F02P 3/02* (2006.01)
*F02P 23/02* (2006.01)    *F02D 41/30* (2006.01)

(21) Application number: **10814047.6**

(22) Date of filing: **21.07.2010**

(86) International application number:
**PCT/US2010/002078**

(87) International publication number:
**WO 2011/028225 (10.03.2011 Gazette 2011/10)**

(54) **METHOD AND SYSTEM OF THERMOCHEMICAL REGENERATION TO PROVIDE OXYGENATED FUEL, FOR EXAMPLE, WITH FUEL-COOLED FUEL INJECTORS**

VERFAHREN UND SYSTEM FÜR THERMOCHEMISCHE REGENERATION ZUR BEREITSTELLUNG EINES OXYGENIERTEN KRAFTSTOFFS, Z.B. MIT KRAFTSTOFFGEKÜHLTEN KRAFTSTOFFEINSPRITZERN

PROCÉDÉ ET SYSTÈME DE RÉGÉNÉRATION THERMO-CHIMIQUE EN VUE DE L'OBTENTION D'UN COMBUSTIBLE OXYGÉNÉ, PAR EXEMPLE, AVEC DES INJECTEURS REFROIDIS PAR CARBURANT

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **07.12.2009 US 653085**
**07.12.2009 PCT/US2009/006704**
**09.03.2010 US 312100 P**
**27.08.2009 US 237479 P**
**19.10.2009 US 581825**
**27.08.2009 US 237425 P**
**13.02.2010 US 304403 P**
**27.08.2009 US 237466 P**

(43) Date of publication of application:
**04.07.2012 Bulletin 2012/27**

(73) Proprietor: **McAlister Technologies, LLC**
**Phoenix, AZ 85016 (US)**

(72) Inventor: **MCALISTER, Roy, E.**
**Phoenix**
**AZ 85029 (US)**

(74) Representative: **Beattie, Alex Thomas Stewart**
**Forresters**
**Skygarden**
**Erika-Mann-Strasse 11**
**80636 München (DE)**

(56) References cited:
**US-A- 4 984 549      US-A- 5 947 091**
**US-A- 6 155 212      US-A- 6 155 212**
**US-A1- 2002 139 871      US-A1- 2005 211 229**
**US-A1- 2007 283 927      US-A1- 2008 264 377**
**US-A1- 2008 277 505      US-A1- 2009 133 676**

EP 2 470 764 B1

**Description**

CROSS-REFERENCE TO RELATED APPLICATION(S)

The present application claims priority to and the benefit of U.S. Provisional Application No. 61/237,425, filed August 27, 2009 and titled OXYGENATED FUEL PRODUCTION; U.S. Provisional Application No. 61/237,466, filed August 27, 2009 and titled MULTIFUEL MULTIBURST; U.S. Provisional Application No. 61/237,479, filed August 27, 2009 and titled FULL SPECTRUM ENERGY; U.S. Patent Application No. 12/581,825, filed October 19, 2009 and titled MULTIFUEL STORAGE, METERING AND IGNITION SYSTEM; U.S. Patent Application No. 12/653,085, filed December 7, 2009 and titled INTEGRATED FUEL INJECTORS AND IGNITERS AND ASSOCIATED METHODS OF USE AND MANUFACTURE; PCT Application No. PCT/US09/67044, filed December 7, 2009 and titled INTEGRATED FUEL INJECTORS AND IGNITERS AND ASSOCIATED METHODS OF USE AND MANUFACTURE; U.S. Provisional Application No. 61/304,403, filed February 13, 2010 and titled FULL SPECTRUM ENERGY AND RESOURCE INDEPENDENCE; and U.S. Provisional Application No. 61/312,100, filed March 9, 2010 and titled SYSTEM AND METHOD FOR PROVIDING HIGH VOLTAGE RF SHIELDING, FOR EXAMPLE, FOR USE WITH A FUEL INJECTOR.

TECHNICAL FIELD

The following disclosure relates generally to integrated fuel injectors and igniters and associated components for directly injecting and igniting various fuels in a combustion chamber using thermochemical regeneration and more specifically, using fuel to cool the injector assembly during operation.

BACKGROUND

Fuel injection systems are typically used to inject a fuel spray into an inlet manifold or a combustion chamber of an engine. Fuel injection systems have become the primary fuel delivery system used in automotive engines, having almost completely replaced carburetors since the late 1980s. Fuel injectors used in these fuel injection systems are generally capable of two basic functions. First, they deliver a metered amount of fuel for each inlet stroke of the engine so that a suitable air-fuel ratio can be maintained for the fuel combustion. Second they disperse the fuel to improve the efficiency of the combustion process. Conventional fuel injection systems are typically connected to a pressurized fuel supply, and the fuel can be metered into the combustion chamber by varying the time for which the injectors are open. The fuel can also be dispersed into the combustion chamber by forcing the fuel through a small orifice in the injectors.
US4,984,549 discloses an electromagnetic valve assembly having an armature and armature-actuated valve member the mass of which is substantially less than the armature and which is not fixedly connected to the armature. Upon electrical energization the armature first overcomes a restraining force and then travels a major part of its stroke before actuating the valve member, at a relatively high speed, thereby causing movement of the valve member by kinetic energy of the armature

BRIEF DESCRIPTION OF THE DRAWINGS

Figure 1A is a schematic cross-sectional side view of an injector configured in accordance with an embodiment of the disclosure.

Figure 1B is a cross-sectional side view of an injector configured in accordance with another embodiment of the disclosure.

Figure 2 is a cross-sectional side partial view of an injector configured in accordance with another embodiment of the disclosure.

Figure 3A is an isometric view of a component of the injector of Figures 1B and 2.

Figure 3B is a cross-sectional side view taken substantially along the lines 3B-3B of Figure 3A, and Figure 3C is cross-sectional side view taken substantially along the lines 3C-3C of Figure 3A.

Figure 4 is a cross-sectional view of an example not embodying the present invention.

Figure 5 is a schematic cross-sectional view of a system not embodying the present invention.

Figure 6 is a schematic view of an alternative system in accordance with the disclosure.

DETAILED DESCRIPTION

Overview

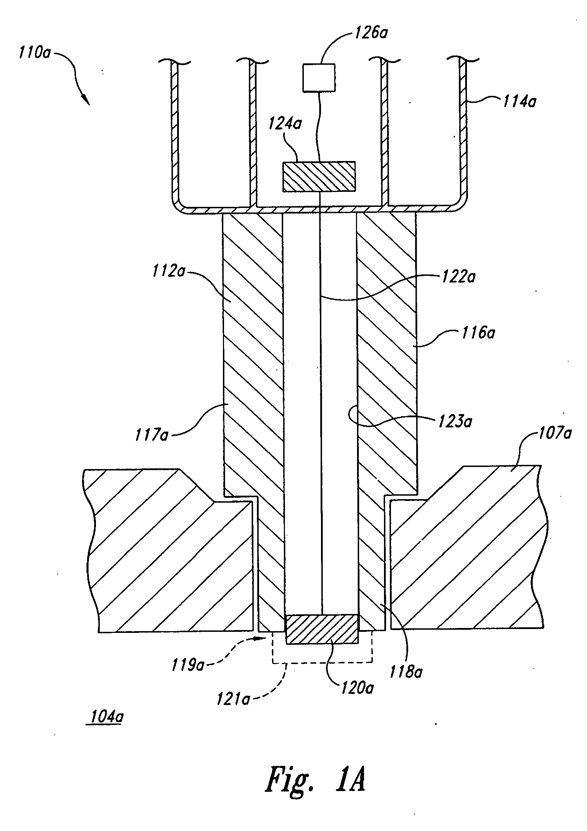

Figure 1A is a schematic cross-sectional side view of an integrated injector/igniter 110a ("injector 110a") not embodying the invention. The injector 110a illustrated in Figure 1A is configured to inject different fuels into a combustion chamber 104a and to be controlled to adaptively adjust the pattern and/or frequency of the fuel injections or bursts based on combustion properties and conditions in the combustion chamber 104a. As explained in detail below, the injector 110a and other injectors described herein can optimize the injected fuel for rapid ignition and complete combustion. In addition to injecting the fuel, the injector 110a includes one or more integrated ignition features that are configured to ignite the injected fuel. As such, the injector 110a can be utilized to convert conventional internal combustion engines to be able to operate on multiple different fuels. Although several of the features of the illustrated injector 110a are shown schematically for purposes of illustration, several of these schematically illustrated features are described in detail below with reference to various features of examples of the disclosure. Accordingly, the relative location, position, size, orientation, etc. of the schematically illustrated components of the injector in Figure 1A are not intended to limit the present disclosure.

In the illustrated example, the injector 110a includes a casing or body 112a having a middle portion 116a extending between a base portion 114a and a nozzle portion 118a. The nozzle portion 118a extends at least partially through a port in an engine head 107a to position an end portion 119a of the nozzle portion 118a at the interface with the combustion chamber 104a. The injector 110a further includes a fuel passage or channel 123a extending through the body 112a from the base portion 114a to the nozzle portion 118a. The channel 123a is configured to allow fuel to flow through the body 112a. The channel 123a is also configured to allow other components, such as an actuator 122a, to pass through the body 112a, as well as instrumentation components and/or energy source components of the injector 110a. In certain examples, the actuator 122a can be a cable or rod that has a first end portion that is operatively coupled to a flow control device or valve 120a carried by the end portion 119a of the nozzle portion 118a. The actuator 122a can be integral with the valve 120a or a separate component that is attached to the valve 120a. As such, the flow valve 120a is positioned proximate to the interface with the combustion chamber 104a. Although not shown in Figure 1A, in certain examples the injector 110a can include more than one flow valve, as well as one or more check valves positioned proximate to the combustion chamber 104a, as well as at other locations on the body 112a.

According to another feature of the illustrated example, the actuator 122a also includes a second end portion operatively coupled to a plunger or driver 124a. The second end portion can further be coupled to a controller or processor 126a. The controller or processor 126a can be positioned on the injector 110a or remotely from the injector 110a. As explained in detail below with reference to various examples of the disclosure, the controller 126a and/or the driver 124a are configured to rapidly and precisely actuate the actuator 122a to inject fuel into the combustion chamber 104a via the flow valve 120a. For example, in certain examples, the flow valve 120a can move outwardly (e.g., toward the combustion chamber 104a) and in other embodiments the flow valve 120a can move inwardly (e.g., away from the combustion chamber 104a) to meter and control injection of the fuel. Moreover, in certain examples, the driver 124a can tension the actuator 122a to retain the flow valve 120a in a closed or seated position, and the driver 124a can relax or relieve the tension in the actuator 122a to allow the flow valve 120a to inject fuel, and vice versa. The driver 124a can be responsive to the controller 126a as well as other force-inducing components (e.g., acoustic, electromagnetic and/or piezoelectric components) to achieve the desired frequency and pattern of the injected fuel bursts.

In certain examples, the actuator 122a can include one or more integrated sensing and/or transmitting components to detect combustion chamber properties and conditions. For example, the actuator 122a can be formed from fiber optic cables, insulated transducers integrated within a rod or cable, or can include other sensors to detect and communicate combustion chamber data. Although not shown in Figure 1A, in other examples, and as described in detail below, the injector 110a can include other sensors or monitoring instrumentation located at various positions on the injector 110a. For example, the body 112a can include optical fibers integrated into the material of the body 112a, or the material of the body 112a itself can be used to communicate combustion data to one or more controllers. In addition, the flow valve 120a can be configured to sense or carry sensors in order to transmit combustion data to one or more controllers associated with the injector 110a. This data can be transmitted via wireless, wired, optical or other transmission mediums to the controller 126a or other components. Such feedback enables extremely rapid and adaptive adjustments for optimization of fuel injection factors and characteristics including, for example, fuel delivery pressure, fuel injection initiation timing, fuel injection durations for production of multiple layered or stratified charges, the timing of one, multiple or continuous plasma ignitions or capacitive discharges, etc.

Such feedback and adaptive adjustment by the controller 126a, driver 124a, and/or actuator 126a also allows optimization of outcomes such as power production, fuel economy, and minimization or elimination of pollutive emissions including oxides of nitrogen. U.S. Patent Application Publication No. 2006/0238068 describes suitable drivers for actuating ultrasonic transducers in the injector 110a and other injectors described herein.

The injector 110a can also optionally include an ignition and flow adjusting device or cover 121 a (shown in broken lines in Figure 1 A) carried by the end portion 119a adjacent to the engine head 107a. The cover 121 a at least partially encloses or surrounds the flow valve 120a. The cover 121 a may also be configured to protect certain components of the injector 110a, such as sensors or other monitoring components. The cover 121 a can also act as a catalyst, catalyst carrier and/or first electrode for ignition of the injected fuels. Moreover, the cover 121 a can be configured to affect the shape, pattern, and/or phase of the injected fuel. The flow valve 120a can also be configured to affect these properties of the injected fuel. For example, in certain examples the cover 121 a and/or the flow valve 120a can be configured to create sudden gasification of the fuel flowing past these components. More specifically, the cover 121 a and/or the flow valve 120a can include surfaces having sharp edges, catalysts, or other features that produce gas or vapor from the rapidly entering liquid fuel or mixture of liquid and solid fuel. The acceleration and/or frequency of the flow valve 120a actuation can also suddenly gasify the injected fuel. In operation, this sudden gasification causes the vapor or gas emitted from the nozzle portion 118a to more rapidly and completely combust. Moreover, this sudden gasification may be used in various combinations with super heating liquid fuels and plasma or acoustical impetus of projected fuel bursts. In still further embodiments, the frequency of the flow valve 120a actuation can induce plasma projection to beneficially affect the shape and/or pattern of the injected fuel. U.S. Patent No. 4,122,816 describes suitable drivers for actuating plasma projection by injector 110a and other injectors described herein.

According to another aspect of the illustrated embodiment, and as described in detail below, at least a portion of the body 112a is made from one or more dielectric materials 117a suitable to enable the high energy ignition to combust different fuels, including unrefined fuels or low energy density fuels. These dielectric materials 117a can provide sufficient electrical insulation of the high voltage for the production, isolation, and/or delivery of spark or plasma for ignition. In certain examples, the body 112a can be made from a single dielectric material 117a. In other examples, however, the body 112a can include two or more dielectric materials. For example, at least a segment of the middle portion 116a can be made from a first dielectric material having a first dielectric strength, and at least a segment of the nozzle portion 118a can be made from a dielectric material having a second dielectric strength that is greater than the first dielectric strength. With a relatively strong second dielectric strength, the second dielectric can protect the injector 110a from thermal and mechanical shock, fouling, voltage tracking, etc. Examples of suitable dielectric materials, as well as the locations of these materials on the body 112a, are described in detail below.

In addition to the dielectric materials, the injector 110a can also be coupled to a power or high voltage source to generate the ignition event to combust the injected fuels. The first electrode can be coupled to the power source (e.g., a voltage generation source such as a capacitance discharge, induction, or piezoelectric system) via one or more conductors extending through the injector 110a. Regions of the nozzle portion 118a, the flow valve 120a, and/or the cover 121 a can operate as a first electrode to generate an ignition event (e.g., spark, plasma, compression ignition operations, high energy capacitance discharge, extended induction sourced spark, and/or direct current or high frequency plasma, in conjunction with the application of ultrasound to quickly induce, impel, and complete combustion) with a corresponding second electrode of the engine head 107a. As explained in detail below, the first electrode can be configured for durability and long service life. In still further embodiments of the disclosure, the injector 110a can be configured to provide energy conversion from combustion chamber sources and/or to recover waste heat or energy via thermochemical regeneration to drive one or more components of the injector 110 from the energy sourced by the combustion events.

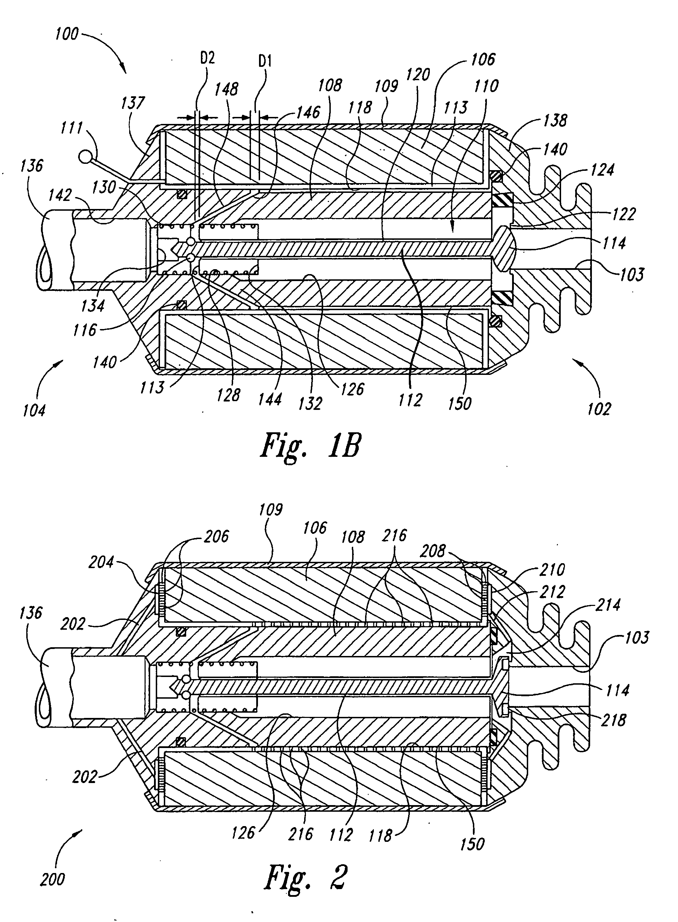

The features of the injector 110a described above with reference to Figures 1A can be included in any of the examples described below with reference to Figures 1B-9.

Additional Embodiments of Integrated Fuel Injectors and Igniters and Associated Components

Figure 1B is a cross-sectional side view of an injector 100 configured in accordance with an embodiment of the disclosure that includes combined fuel injection and ignition features. As described in detail below, the illustrated embodiment of the injector 100 includes an electromagnetic actuator assembly and corresponding valve assembly that provide a rugged and versatile yet inexpensive assembly for precisely metering fuel to achieve the desired fuel flow characteristics. In the illustrated embodiment, the injector 100 includes several features that are generally similar in structure and function to the corresponding features of the injector 110a described above with reference to Figure 1A. For example, the injector 100 includes a nozzle portion 102 opposite a base portion 104. The nozzle portion 102 is configured to at least partially extend through a port in an engine head to position the end of the nozzle portion 102 at an interface with a combustion chamber. As described in detail below, the base portion 104 is configured to receive one or more fuels from a fuel source (e.g., a pressurized fuel source), and the nozzle portion 102 is configured to deliver and/or precisely meter the fuel into the combustion chamber through a fuel exit passage 103.

In the illustrated embodiment, the injector 100 includes a force generator 106 that actuates a plunger or driver 108 to in turn move a valve assembly 110. The force generator 106 is positioned within a bobbin or housing 109, such as a conductive metallic casing. Suitable materials for the force generator bobbin or housing 109 include, for example, beryllia and various graphite, silver, and/or aluminum filled polymers that are designed to enhance heat transfer. The force generator 108 and/or the housing 109 can also be coupled to voltage source or other suitable energy source 111, as well as a controller. In certain embodiments, the force generator 106 can be solenoid winding that is an electromagnetic force generator, a piezoelectric force generator, or other suitable type of force generator for moving the driver 108.

In accordance with aspects of this disclosure, the solenoid winding may be incorporated in a circuit to serve as an electromagnet for operation of armature and valve actuation and additionally as a transformer such as a pulse transformer, transformer with multiple windings, or autotransformer for generating spark or plasma discharges at the interface to the combustion chamber. In other instances it is desired to provide a solenoid winding comprising multiple insulated conductors for the purpose of increasing the number of turns and current magnitude for greater magnetic circuit strength when energized and to thus develop increased magnetic force and decrease the pull-in time for rapid operation of an actuator. Various materials such as polyimide, polyetherimide, parylene, various modified chemical vapor deposited poly (p-xylene) films, glass ceramics, including micro and nano particles including the dielectric systems disclosed in copending US Patent Application Entitled "Integrated Fuel Injectors and Igniters and Associated Methods of Use and Manufacture," US Patent Application No. 12/653,085 (the '085 application), are used to insulate the conductor windings and enable voltage transformation whereby the multiple windings are energized for very rapid pull in, and at least one winding portion is then switched to serve as the secondary of a transformer circuit to provide the turns ratio and induction desired for the spark or plasma developed at the combustion chamber interface for ignition.

The valve assembly 110 includes an actuator 112 (e.g., a cable, stiffened cable, rod, valve extension, etc.) having a flow valve 114 at the nozzle portion 102, and an actuator stop 116 at the base portion 104 opposite the nozzle portion 102. In certain embodiments, the flow valve 114 can be integrally formed with the actuator 112. In other embodiments, however, the flow valve 114 can be separate from and attached to the actuator 112. Moreover, in certain embodiments the stop 116 can be a wire, such as a constrictive spring wire, that is attached to the second end portion of the actuator 112. For example, the stop 116 can be at least partially embedded in an annular groove in the actuator 112, the annular groove having a depth of at least approximately 50% of the diameter of the motion stop 116. In other embodiments, however, the stop 116 and other actuator stops disclosed herein can be any other type of protrusion on the actuator 112 that is attached to or integrally formed with the actuator 112. The stop 116 is positioned on the actuator 112 to contact a contact surface 113 of the driver 108 when the force generator 106 actuates the driver 108 to move the actuator 112 and consequently open the flow valve 114.

In the closed position the flow valve 114 rests against a valve seat 122 in the nozzle portion 102. In certain embodiments, the surface of the flow valve 114 that contacts the valve seat 122 can be a generally spherical or conical surface that is fine finished or polished for sealing against the valve seat 122. The nozzle portion 102 can also include a biasing or attractive element 124, such as a magnet, permanent magnet, etc., that attracts the driver 108 towards the nozzle portion 102 to at least partially retain the valve 114 in the closed position against the valve seat 122. For example, the attractive element 124 can be coupled to a controller or computer and selectively attract the driver 108 towards the nozzle portion 102. In other embodiments, actuation of the driver 108 can overcome the attractive force of the attractive element 124. As described in detail below, the valve 114 can also be retained in the closed position with other biasing components and/or fuel pressure within the injectors 100.

The driver 108 is positioned in a driver cavity 118 in the injector 100 to allow the driver 108 to move longitudinally through the injector 100 in response to excitation from the force generator 106. Moreover, the actuator 112 is positioned in an actuator cavity or opening 120 extending longitudinally through the driver 108. The actuator opening 120 thereby allows the driver 108 to move longitudinally in the injector 100 with reference to the actuator 112 until the driver 108 contacts the actuator stop 116. In the illustrated embodiment, the driver 108 also includes a fuel cavity 126 extending longitudinally therethrough and spaced radially apart from the actuator opening 120. The fuel cavity 126 is fluidly coupled to a fuel passageway or channel 128 in the base portion 104. The fuel channel 128 is also coupled to a fuel conduit 136, which is in turn coupled to a fuel source, such as a pressurized fuel source. In certain embodiments, the fuel conduit 136 can include a fuel filter 142 configured to filter or otherwise condition the fuel prior to entering the body of the injector 100.

In the illustrated embodiment, the base portion 102 also includes a biasing member 130 (e.g., a spring such as a coiled compression spring) positioned in the fuel channel 128. The biasing member 130 contacts a first biasing surface 132 of the driver 108, as well as a second biasing surface 134 of the fuel channel 128. In this manner, the biasing member 130 urges the driver 108 towards the nozzle portion 102 to retain the actuator 112 and corresponding flow valve 114 in the closed position.

The force generator housing 109 is coupled to a first end cap 137 at the base portion 104, and a second end cap 138 at the nozzle portion 102. The housing 109 can be attached (e.g., hermetically sealed via soldering, brazing, welding, structurally adhesive sealing, etc.) to each of the first and second end caps 137, 138 to prevent fuel from escaping from the injector 100. Seals 140, such as o-rings, can also be used to maintain a fluid tight connection between the housing 109 and the first and second end caps 137, 138.

According to another aspect of the illustrated embodiment, an end portion 144 of the driver 108 in the base portion 104 has a generally conical or frustoconical shape. More specifically, the end portion 144 of the driver 108 has an outer end surface 146 that has a generally conical or frustoconical shape. The outer end surface 146 of the driver 108 is spaced apart from a corresponding contact surface 148 of the first end cap 137 having a matching contour or shape. When the flow valve 114 is in the closed position against the valve seat 122 and the driver 108 is in a relaxed or non-actuated state, the outer end surface 146 is spaced apart from the contact surface 148 of the end cap 137 by a first distance $D_1$. In addition, at this position the contact surface 113 of the driver 108 is spaced apart from the stop 116 on the actuator 112 by a second distance $D_2$. The second distance $D_2$ accordingly allows the driver 108 to gain momentum before striking the stop 116 of the actuator 112. For example, the first distance $D_1$ is the total distance that the driver 108 travels to move the flow valve 114 via the actuator 112 to open the flow valve 314. More specifically, first distance $D_1$ is at least approximately equal to the second distance $D_2$ plus the distance that the flow valve 114 moves to be sufficiently spaced apart from the valve seat 122 to inject the fuel into the combustion chamber. In one embodiment, the second distance $D_2$ can be between approximately 10% to 40% of the first distance $D_1$. In other embodiments, however, the second distance $D_2$ can be less than 10% or greater than 40% of first distance $D_1$. In still other embodiments, the second distance D2 can be eliminated from the injector 100 such that the driver 108 contacts the actuator stop 116 when the valve is in the closed position.

In operation, the fuel conduit 136 introduces fuel through the fuel filter 142 into the base portion 104 of the injector 100. As the fuel flows through the injector 100, a controller can precisely power the force generator 106 to actuate the driver 108, which in turn moves the actuator 112 to lift the flow valve 114 off of the valve seat 122 (i.e., to move the flow valve 114 inwardly). The actuated driver 108 can accordingly overcome the biasing force of the biasing member 130 and/or the attractive element 124 to move away from the nozzle portion 102. Moreover, the illustrated embodiment allows for operation of the flow valve 114 at relatively high pressure differentials by allowing the driver 108 to gain considerable momentum and associated kinetic energy while moving the second distance $D_2$ prior to impacting the actuator stop 116 to move the valve 114. As such, the driver 108 can overcome a considerable pressure gradient to move the flow valve 114. In embodiments where the second distance $D_2$ is eliminated, the driver 108 can directly or instantly move the actuator 112 in response to current flow in the force generator 106.

Interruption of the current in the force generator 106 in response to the controller allows fuel flow and the resulting pressure, the biasing member 130, and/or the attractive element 124 to urge or force the driver 108 to the normally closed position, which in turn allows the flow valve 114 to return to the normally closed position. For example, a distal end portion of the driver 108 can contact or otherwise move the flow valve 114 to the closed position on the valve seat 122. Subsequent application of current to the force generator 106 can move the driver 108 to contact the actuator 112 and again move or lift the valve 114 off the valve seat 122 to inject fuel into the combustion chamber.

In addition to filtering particles and debris from the fuel, the filter 142 at the base portion 104 can also function as a catalytic processor for preventing any monatomic or ionic hydrogen from further passage into the injector 100, including into the fuel channel 128, which houses the biasing member 130. This purpose is supported by the finding that steel alloys do not become embrittled by diatomic hydrogen ($H_2$) even though exposure to monatomic hydrogen and ionic hydrogen, as may be encountered during welding operations, in acidic environments, and during metal plating operations, causes degradation and embrittlement of such alloys. Accordingly, the filter 142 can prevent the adverse degradation of the biasing member 130 by hydrogen embrittlement. Equations F1 and F2 below summarize the elimination of the hydrogen ions and atomic hydrogen by the catalytic action of the filter 142.

$$2H^+ + 2e^- \rightarrow H_2 \qquad \text{Equation F1}$$

$$2H \rightarrow H_2 \qquad \text{Equation F2}$$

In the process of Equation F1, electrons are supplied by grounding the injector 100 to an electron source via the metallic fuel conduit 136. Electrons may also be supplied for accomplishing the process of Equation F1 by grounding one end of force generator 106 to the conductive housing 109. Nucleation of diatomic hydrogen from monatomic hydrogen can be assured by various agents and compounds, including for example, oxides such as zinc oxide, tin oxide, chromia, alumina, and silica that may be incorporated in the filter 142 as fibers and/or particles including surfaces of substrates such as aluminum and/or aluminum-silicon alloys. Such fibers, particles, and/or other suitable forms made of metals and/or alloys such as aluminum, magnesium, or zinc can also serve as catalysts in the filter 142. Similarly chemical vapor deposition and/or sputtered deposits of these metals on various substrates, followed by partial oxidation, can be positioned in the filter 142 to provide catalytic processing as summarized by Equations F1 and F2. Fuels that provide oxidizing potential, such as "oxygenated" fuels that contain water vapor, enable self-healing of such metal oxides. In embodiments where high strength alloy materials, such as music wire, spring steel, precipitation-hardened (PH) steel, or a chrome-silicon steel alloy, are selected for the biasing member 130, additional protection may also be provided by plating the biasing member 130 with protective metals such as aluminum. For example, the biasing member 130 can be plated with any suitable plating methods including, for example, hot dip, electrolytic, chemical vapor, and/or sputtering processes.

The injector 100 of the illustrated embodiment is also capable of dispensing very high pressure fuels, including hydrogen-characterized fuels that are produced as mixtures of methane from anaerobic digestion, thermal dissociation, or natural gas sources, as well as hydrogen produced by electrolysis, pyrolysis, or reformation of selected hydrocarbons. Such pressurized fuels, such as 10,000 psi hydrogen, methane, ammonia, or other hydrogen characterized mixtures can be supplied to the injector 100 and precisely metered by the injector 100 to achieve desired fuel bursts.

According to another feature of the illustrated embodiment, the driver 108 is proportioned as a relatively long component in the injector 100. More specifically, the longitudinal length of the driver 108 and the corresponding longitudinal length of the force generator 106 may be several times larger than the diameter of driver 108. This can allow or otherwise facilitate cooling of these components by fuel that is flowing through the injector 100. More specifically, the fuel flowing thought the injector 100 can cool the driver 108 and/or force generator 106. For example, as fuel flows along a fuel channel or passage 113 extending longitudinally along the injector 100, as well as through the driver 108 in the fuel bore or cavity 126, and/or around the driver 108 in a second fuel bore or passageway 150 in the driver cavity 118 generally surrounding the driver 108, the fuel can absorb heat from the driver 108. This is advantageous in many applications in modern overhead valve engines that virtually eliminate the opportunity to reject heat to the exterior surroundings of the injector because the temperature of the environment around and/or under the engine's valve cover generally approaches the operating limit of polymer compounds that insulate the magnet wire in the force generator 106.

Figure 2 is a cross-sectional side partial view of an injector 200 configured in accordance with another embodiment of the disclosure. The injector 200 includes several features that are generally similar in structure and function to the corresponding features of the injector 100 illustrated in Figure 1B and other injectors disclosed herein. For example, the injector 200 illustrated in Figure 2 includes the fuel conduit 136, the force generator 106, the driver 108, and the corresponding actuator 112 and associated flow valve 114. The illustrated injector 200 also includes a biasing or attractive element 212 (e.g., a ring magnet or a permanent ring magnet) to attract or force the driver 108 to the normally closed position. The valve 114 can also include a seal 218, such as a ring-like elastomeric seal or o-ring, for applications in which bubble free sealing is desired at the valve 114 and when utilizing fuels that may precipitate or otherwise source solid particles.

In the illustrated embodiment, the injector 200 further includes several additional fuel flow paths or channels that direct the fuel through various components of the injector 200 to allow the fuel to contact surfaces of these components and cool or otherwise transfer heat from these components to the fuel. More specifically, for cooling the force generator 106 (which may include multiple solenoid windings) in the illustrated embodiment, the injector 200 includes a first fuel cooling passage 202 coupled between the fuel conduit 136 and an inlet distributor 204 (e.g., an annular or ring-like distributor) at the force generator 106. The inlet distributor 204 disperses the fuel into the housing 109 around the force generator 106 through multiple inlet vents 206. The injector 200 also includes multiple outlet vents 208 to allow the fuel to exit the force generator 106 and collect at an outlet distributor or collector 210 (e.g., an annular or ring-like distributor). A second fuel cooling passage 212 extends form the outlet distributor 210 to fuel channel 214. As the valve 114 opens, the fuel can exit the injector 200 by passing from the fuel channel 214 to the fuel exit passage 103.

According to another feature of the illustrated embodiment, the injector 200 also includes additional fuel passages 216 extending radially outwardly to allow the fuel to pass between the force generator 106 and the driver 108. For example, these fuel passages 216 fluidly couple the fuel bore 150 in the driver cavity 118 with the housing 109 encompassing the force generator 106. As such, during operation the fuel can also pass radially outwardly and/or radially inwardly to transfer heat from the components of the injector 200, such as the force generator 106 and the driver 108, for example.

In certain embodiments, such as four stroke engine applications, the period during which fuel injection occurs typically ranges from about 30° to 120° of every other crank rotation of a complete cycle (e.g., 720°). Longitudinal fuel cavities 126 and 113 (Figure 1) can accordingly provide for rapid cooling of the driver 108, particularly during the period ranging from approximately 30° to 120° of the crank rotation. As such, the driver 108 can serve as an internal heat sink to receive heat rejected from solenoid coil or force generator 106. Additional heat can also be rejected from the force generator 106 to fuel circulating through the various fuel distributors and passageways 204, 206, 208, and 216. Accordingly, during the 690° to 720° period of crank rotation when driver 108 ard valve 114 are in the normally closed position, the force generator 106 can be provided with superior heat rejection capabilities to assure efficient rapid action and long life.

Such heat transfer from the components of the injectors 100, 200 can be beneficially added to the fuel that is delivered to the combustion chamber instead of being lost to the environment. Similarly, energy harvesting by thermoelectric, photovoltaic, vibrational and pressure piezoelectric generators is facilitated by such heat transfer to fuel passing through these injector embodiments with such heat sinking capabilities. Such heat transfer is also beneficial for long life, minimization of friction, and rapid operation to adequately cool the force generator 106 and driver 108. Transferring heat to the fuel that flows through the force generator 106 components and related features allows low cost modular component assemblies including the force generator 106 to be incorporated within thermally insulating glass or polymers.

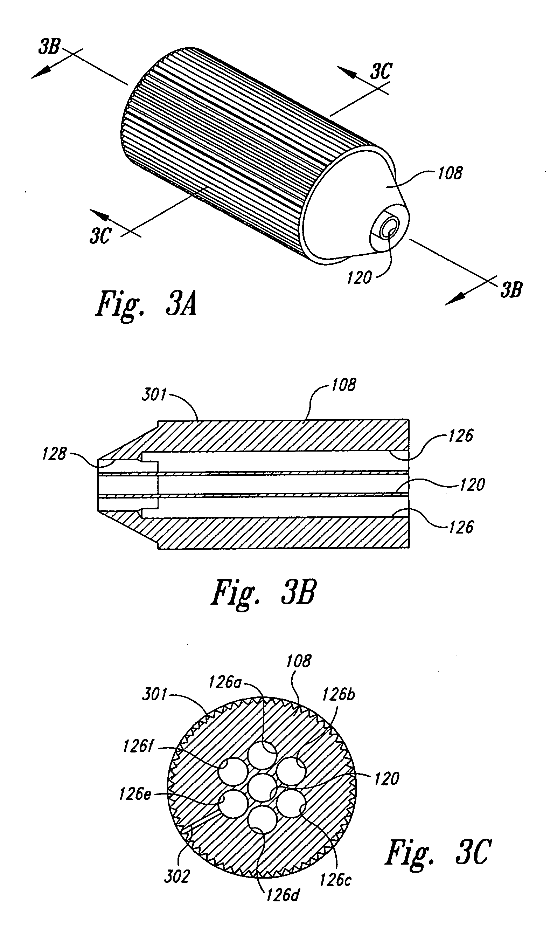

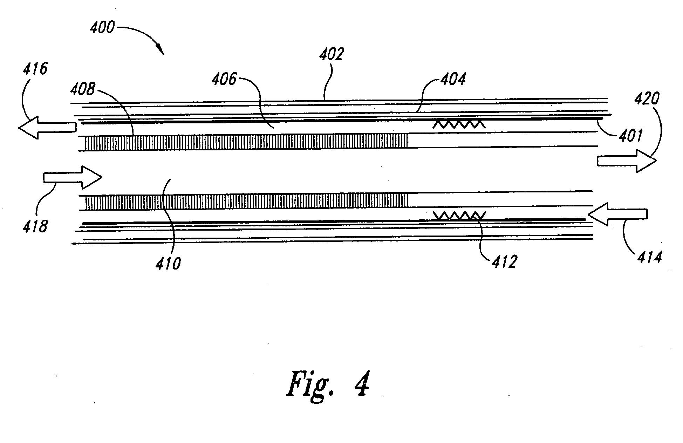

Figure 3A is an isometric view of the driver 108, Figure 3B is a cross-sectional side view taken substantially along the lines 3B-3B of Figure 3A, and Figure 3C is cross-sectional side view taken substantially along the lines 3C-3C of Figure 3A illustrating several of the features of the driver 108. Referring to Figures 3A-3C together, the driver 108 includes a body 301 with the actuator opening 120 extending centrally and longitudinally therethrough. The actuator opening 120 is configured to movably receive the actuator 112 of Figure 1B. The body 301 also includes the initial fuel channel 128 that is fluidly coupled to one or more fuel cavities 126 (e.g., first-sixth fuel cavities 126a-126f illustrated in Figure 3C) spaced radially apart from the actuator opening 120. The fuel cavities 126 extend longitudinally through the driver 108 to allow fuel to flow therethrough while contacting the body 301. Although the driver 108 includes six fuel cavities 126 that are symmetrically spaced apart in the illustrated embodiment, in other embodiments the driver can have more or less fuel cavities 126 that are positioned in symmetrical or nonsymmetrical distribution patterns. An exterior surface of the body 301 also includes multiple ridges 304 (Figure 4C) to allow the fuel to flow around the driver 108 within the driver cavity 118 (Figure 1 B).

According to yet another feature of the illustrated embodiment, the body 301 of the driver 108 includes a slot or slit 302 extending radially outwardly from one of the fuel cavities 128. In certain embodiments, the slit 302 can be a generally straight slit or slot that extends radially outwardly from the actuator opening 120. In other embodiments, however, the slit 302 can have a generally curved or spiral shape. The slit 302 is configured to be a material discontinuity in at least a portion of the body 301 of the driver 108 to prevent eddy currents from forming in the driver 108 during operation. Such eddy currents can also be prevented by forming the driver 108 from a ferromagnetic alloy with a high electrical resistance.

Thermochemical Regeneration to Provide Oxygenated Fuel to Combustion Chamber

Figure 4 illustrates a system, not embodying the present invention, for utilizing heat normally discarded from sources such as a heat engine to drive endothermic reactions that provide oxygenated fuel species. In addition to providing numerous significant advantages of an oxygenated fuel species, thermochemical regeneration provides 15% to 30% more fuel value along with hydrogen-characterized fuel combustion characteristics upon combustion compared to the original fuel that is selected for the processes disclosed in the following embodiments.

Hydrogen characterized combustion is seven to ten times faster than hydrocarbons such as methane and therefore enables much more torque to be developed per calorie or BTU of heat released than slower burning fuels that require much earlier ignition and thus cause heat loss and counter-torque losses during the compression period of engine operation.

Equation 501 summarizes the general process for hydrocarbons such as diesel fuel, gasoline, natural gas, propane, ethane, etc:

$$HxCy + yH_2O + HEAT_1 \rightarrow yCO + (y+0.5x)H_2 \qquad \text{Equation 501}$$

$$CH_4 + H_2O + HEAT_2 \rightarrow CO + 3H_2 \qquad \text{Equation 502}$$

Equation 502 summarizes the production of oxygenated carbon fuel as shown whereby methane is reacted with steam to produce carbon monoxide and hydrogen. In operation, heat that is normally rejected through a radiator is added to fuel in a counter current heat exchanger and additional heat is added by counter current heat exchange from the exhaust gases. Steam is transported from the products of combustion through capillaries 408 and presented at the surface of capillary body 408 for reaction such as shown in Equations 501 or 502. Concurrently filed and co-pending applications are incorporated by reference above; these applications disclose various arrangements for such counter current heat exchanges.

Additional heat may be added at startup and in various conditions such as regenerative braking of a vehicle or elevator by application of electric current to heat resistor 412 which may be placed between a first tube 404 and a steam transport capillary 408 as shown. According to aspects of the disclosure, a second tube 402 may serve as a containment shield for air or refractory insulation in the space between the first tube 404 and the second tube 402.

Fuel such as methane that has been preheated by engine coolant is routed through the space between the second tube 404 and the steam transport capillary 408 as shown to react with steam and provide oxygenated fuel such as carbon monoxide along with hydrogen in a stream 416 as shown. Hot exhaust gases, including but not limited to steam, are delivered as a mixture through inlet 418; as the steam is depleted the cooled exhaust gases exit through outlet 420.

Suitable materials for the steam transport capillary 408 include graphene and other forms of carbon and boron nitride (disclosed in copending patent applications incorporated herein), and various refractory materials including but not limited to substrates that serve as pressure and temperature swing media for steam removal from mixtures with nitrogen, carbon dioxide, and oxygen.

In addition to production of oxygenated fuel species from hydrocarbons, another embodiment produces oxygenated fuel species from low cost fuels such as mixtures of alcohol, water and a carbon donor. Equation 503 summarizes the process for an alcohol such as butanol and a carbon donor, for example, a colloidal or otherwise suspended carbon, from a waste source.

$$C_4H_9OH + 4H_2O + C + HEAT_3 \rightarrow 5CO + 9H_2 \qquad \text{Equation 503}$$

In this system the water required for the process may be a combination of steam transported by the steam transport capillary 408 and water provided by the mixture of an alcohol, water and a suspended carbon donor. In this illustration, which is generally typical for various alcohols such as methanol, ethanol, butanol, or isopropanol, the carbon donor is depicted as "C" and the sum of steam that is transported by the steam transport capillary 408 and the water in solution is depicted as "$nH_2O$" or "$4H_2O$" for the illustrative process with butanol.

$$5CO + 9H_2 + 7O_2 \rightarrow \qquad 5CO_2 + 9H_2O + HEAT_4 \qquad \text{Equation 504}$$

If dry or 100% butanol is used as a feedstock for thermochemical production of oxygenated carbon and hydrogen as shown in Equation 503, only about 4/9 or 45% of the water produced by combustion of the products of Equation 503 are required to be delivered by the process depicted in Figure 500.

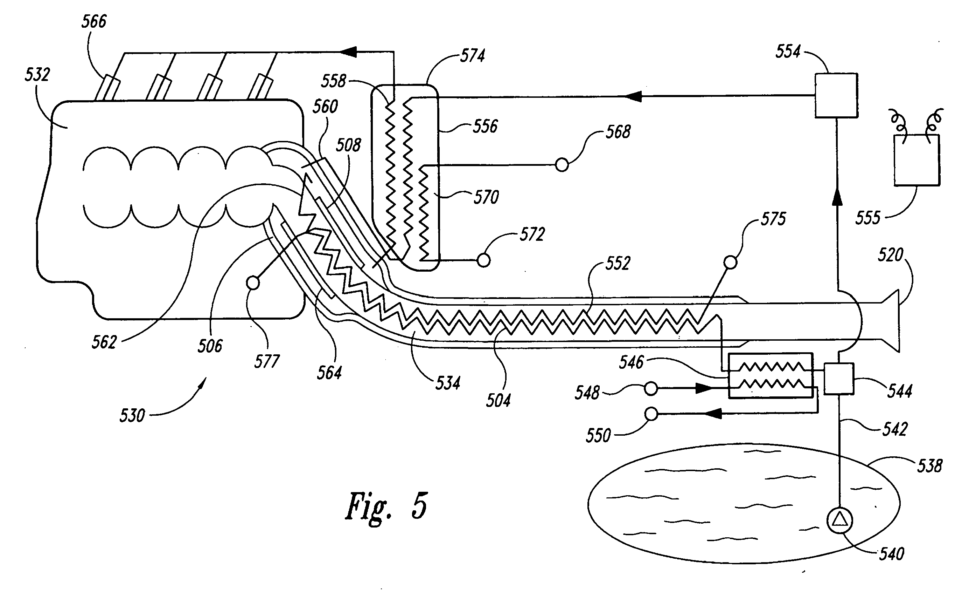

As shown in Figure 5, a thermochemical regeneration system 530 is utilized with heat engine 532. The heat engine 532 provides heat from an engine coolant circuit that includes priority delivery of heat by a controller 555 through a "hot" connection or inlet 548. A cooler return 550 delivers coolant for subsequent heat rejection by a suitable system such as an air cooled radiator (not shown). This serves the purpose of preheating fuel delivered from a sufficiently pressurized tank source 538 or through pump 540 into line 542 and through valve 544 to heat exchanger 546 as shown. According to further aspects of the disclosure, preheated fuel may then be routed to another countercurrent heat exchanger 504 for heating such fuel by heat transfer from exhaust gases 534. According to one embodiment, the exhaust gases 534 may be routed through tubing 562 to reaction zone 506 for the carbon oxygenation process to produce fully oxygenated carbon monoxide along with hydrogen as summarized by Equation 501. Alternative configurations, as one skilled in the art would understand, are within the scope of the disclosure.

Hot steam from the exhaust stream passes across membrane 508 for supplying or supplementing other sources of water utilized in Equation 501. According to further aspects of the disclosure, regenerative energy as may be provided by energy harvesting operations such as regenerative braking or harvesting of combustion chamber energy sources including vibration, radiation, and pressure may be delivered to the tubular heat exchanger 504 by a suitable inductive or resistance heater 552 by connections 575, 577 as shown.

Considerable thermal banking or retention of such heat in surplus of the amount consumed by the endothermic process of Equations 501, 502 or 503 may be provided by material selections such as graphite or boron nitride. Alternatively or additionally, a change of phase heat exchanger and storage capability may be provided by substances such as salt compositions that change phase at a desired temperature such as at or above the temperature required for processes such as shown in Equations 501, 502 and 503. Such thermal banking materials and/or phase change storage may be provided in the zone between tubes 501 and 504 as shown. Fuels such as those shown in Equations 500, 502, and 503 are thus heated to adequate temperature for the reactions indicated and delivered to reaction zone 508 and 506 by insulated tubing 562 as shown.

The stream of hot fuel constituents such as hydrogen and carbon monoxide produced by reactions shown in Equations 501, 502 and 503, is cooled by counter current heat exchange with fuel from the tank 538. An optimization controller 555 controls fuel delivery through control valves 544 and 554. Accordingly, in operation, the fuel from tank 538 is heated to approximately the temperature of the products from the reactor 506, while the stream of hydrogen and carbon monoxide is cooled to nearly the temperature of fuel from tank 538.

This thermochemical regeneration system provides hydrogen-characterized fuel with superior heat removal capabilities for circulation within desired spaces and places for cooling one or more fuel injection valves 566, which in turn control direct fuel injection into the combustion chambers of the engine 532. A resistance or inductive heater 570 with connections 568, 572 may be utilized to further apply heat which has been generated from energy harvesting operations to increase the temperature of fuel delivered by insulated tubing 560 to reaction zone 506.

Illustratively, application of heat generated from energy harvesting operations as described above may provide or enhance plasma generation for use in facilitating the combustion event. Plasma generation in an oxidant such as air before each fuel injection creates thrust of ionized oxidant into the remaining oxidant within the combustion chamber. The inventory of ionized oxidant greatly accelerates ignition and completion of combustion of fuel that subsequently enters the combustion chamber. The pattern of ionized oxidant projecting into the combustion chamber helps impart the flow of remaining oxidant into fuel that follows the path of ionized air. Plasma generation within fuel entering the combustion chamber may be increased to provide sufficient electrical energy to accelerate the fuel for the purpose of overtaking the flow of ionized oxidant. In other modes plasma may be generated in fuel that is subsequently injected to produce additional groups of vectors that penetrate the oxidant within the combustion chamber. An example of such plasma thrusting of directed rays or vectors of plasma projected fuel are shown in concurrently filed applications. Plasma thrusting provides optimal utilization of the oxidant in the combustion chamber in instances that an asymmetric location is provided for fuel injector.

Modes of operating the system that intentionally bring a liquid phase fuel into the combustion chamber, or that convert the fuel into a gaseous phase on-demand, or that provide a desired fluid-gas mixture of fuel, utilize thermochemical regeneration to control the heat input (e.g. increase or decrease) to the fuel prior to injecting the fuel into the combustion chamber. For example, plasma induced fuel preparation and thrust generation is used to develop desired shapes and surface-to-volume characterizations of stratified fuel deliveries and enable efficient utilization of harvested energy. An illustrative example provides for regenerative braking of a vehicle, elevator or similar event to produce electrical energy and/or conversion of combustion chamber sourced radiation, pressure, thermal or vibration energy whereby such harvested electricity is utilized to produce the desired plasma. Examples of plasma shaping and characterization of fuel injection and oxidation events include: plasma ionization of oxidant prior to the arrival of fuel; plasma ionization of oxidant prior to the arrival of fuel followed by continued ionization of injected fuel; plasma ionization of fuel that is injected into oxidant within the combustion chamber; plasma ionization of at least a layer of oxidant adjacent to a layer of fuel; plasma ionization of a layer of oxidant adjacent to a layer of fuel adjacent to a layer of oxidant; plasma ionization of a mixture of fuel and oxidant; plasma ionization of oxidant after any of the above described events; plasma production of ion currents that are electromagnetically thrust into the combustion chamber; and plasma production of ion currents that are electromagnetically thrust and magnetically accelerated to desired vectors within the combustion chamber.

Plasma thrusting of oxidant, mixtures of oxidant and fuel, or fuel ions is provided by the electromagnetic forces that are generated by high current discharges. The general approach of such plasma generation is disclosed in exemplary references such as U.S. Patent Nos. 4,122,816; 4,774,914 and 5,076,223, and may utilize various high voltage generation systems including the type disclosed in U.S. Patent No. 4,677,960. Shaping of the plasma that may be generated in oxidant, fuel, and/or mixtures of oxidant and fuel may be accomplished by an electromagnetic lens such as utilized to selectively aim streams of electrons in a cathode ray tube or as disclosed in U.S. Patent No. 4,760,820, regarding streams of ions. Generally it is undesirable to incur the engine efficiency penalty and loss of selectivity of the type of ion generation desired and adaptive ion distribution shaping capabilities that the present invention achieves by reliance upon a high-pressure fuel delivery system (such as a high-pressure fuel delivery system disclosed in U.S. Patent No. 5,377,633).

In operation, plasma generation in an oxidant, such as excess air, before each fuel injection event, selectively creates a thrust of ionized oxidant into the remaining oxidant within the combustion chamber. The inventory of ionized oxidant greatly accelerates ignition and completion of combustion of fuel that subsequently enters the combustion chamber.

The pattern of ionized oxidant projecting into the combustion chamber is controlled by the voltage and current applied to the plasma that is formed and helps impart the flow of remaining oxidant into fuel that follows the path of ionized air. Plasma generation within fuel entering the combustion chamber may be increased to provide sufficient electrical energy to electromagnetically accelerate the fuel for the purpose of overtaking the flow of ionized oxidant.

In other modes of operation plasma generation may be modulated by control of the voltage and amperage delivered in injected fuel to provide greater velocity and penetration of fuel-rich layers or bursts into an oxidant within the combustion chamber.

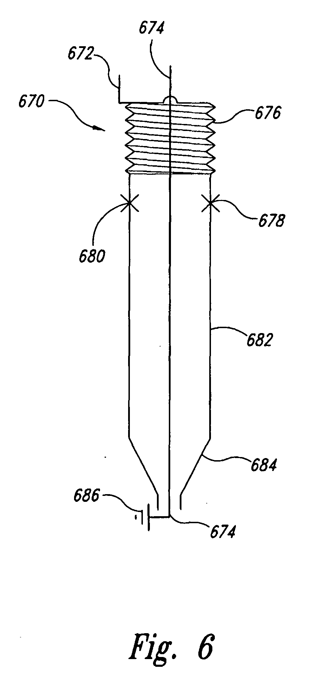

As further shown in Figure 6, one system 670 for delivering fuel from inlet 672 to the interface of a combustion chamber includes a voltage delivery source or first electrode 474 (shown the near electrically grounded location 486). Voltage sufficient to ionize fuel, fuel-oxidant mixtures or oxidant is delivered from the voltage delivery source or electrode 474 to second electrode 474' by a conductor contained within a suitable dielectric insulator. In accordance with aspects of the disclosure, fuel is delivered to a heat exchanger 476 (e.g. from a force generator, such as a solenoid winding) to remove heat from one or more valves 478, 480 such as a solenoid valve. At times of fuel injection, one or more channels or conduits including a coaxial delivery circuit 482 and 484 deliver fuel to the interface of a combustion chamber for ignition by plasma produced by electrodes 474, 474'.

Another embodiment of the disclosure provides for interchangeable utilization of fuel selections including mixtures of fuels such as diesel fuel; melted paraffin; gasoline; casing head or "drip" gasoline; methane; ethane; propane; butane; fuel alcohols; wet fuels such as 160-proof mixtures of water and one or more alcohols such as methanol, ethanol, butanol, or isopropanol; producer gas; and hydrogen. This is enabled by adaptive adjustment to provide sufficient plasma in each fuel injection delivery to suddenly produce fuel alterations including fuel evaporation/vaporization and chemical cracking to subdivide large molecules into smaller components including ionized species. Thus a wide variety of fuel selections, particularly very low cost fuels, are acceptable including fuels with contaminants such as water and cetane ratings that are far outside of acceptable "diesel fuel" specifications. Furthermore, the plasma may be generated by electrode nozzles that produce sufficient plasma thrust of such ionized fuel species to penetrate desired distances into oxidant within the combustion chamber to allow relatively low fuel delivery pressures compared to typical diesel fuel pressurization requirements for achieving similar oxidant utilization. This overcomes the disadvantages and limitations of cetane-characterized fuel selection, "diesel delay," knock and relatively uncontrolled peak combustion temperatures that characterize conventional compression-ignition systems.

Such plasma induced fuel preparation and thrust generation to develop desired shapes and surface-to-volume characterizations of stratified fuel deliveries enables efficient utilization of harvested energy. An illustrative example provides for regenerative braking of a vehicle, elevator or similar event to produce electrical energy and/or conversion of combustion chamber sourced radiation, pressure, thermal or vibration energy whereby such harvested electricity is utilized to produce the desired plasma. This overcomes the substantial loss of engine efficiency due to the pressure-volume work required to compress an oxidant sufficiently to heat it 370°C (700°F) or more including losses of such work-generated heat through the intentionally cooled walls of the combustion chamber along with the substantial work required to pump and pressurize diesel fuel to high pressures such as 1360 bar (20,000 PSI).

It will be apparent that various changes and modifications can be made without departing from the scope of the disclosure as defined in the appended claims. Unless the context clearly requires otherwise, throughout the description and the claims, the words "comprise," "comprising," and the like are to be construed in an inclusive sense as opposed to an exclusive or exhaustive sense; that is to say, in a sense of "including, but not limited to." Words using the singular or plural number also include the plural or singular number, respectively. When the claims use the word "or" in reference to a list of two or more items, that word covers all of the following interpretations of the word: any of the items in the list, all of the items in the list, and any combination of the items in the list.

Features of the various embodiments described above can be combined to provide further embodiments.

**Claims**

1. A fuel-cooled fuel injector (100, 200) configured to inject fuel into a combustion chamber, the fuel injector (100, 200) comprising:

   a body having a base portion (104) opposite a nozzle portion (102), wherein the base portion (104) is configured to receive the fuel into the body and the nozzle portion (102) is configured to be positioned adjacent to the combustion chamber;
   a valve (114) carried by the nozzle portion (102), wherein the valve (114) is movable between a closed position and an open position to inject the fuel into the combustion chamber;
   an actuator (112) coupled to the valve (114) and extending longitudinally through the body towards the base portion (104);
   a driver (108) carried by the body, wherein the driver (108) includes a cavity (126) extending longitudinally therethrough, and the actuator (112) is movably positioned in the cavity (126), and the driver (108) is movable between a first position and a second position, wherein in the first position the driver (108) is spaced apart from the actuator (112), and contacts and at least partially retains the valve (114) in the closed position, and in the second position the driver (108) moves the actuator (112) to move the valve (114) to the open position; wherein the actuator (112) extends through the body coaxially within the driver (108) and has a first end coupled to the valve (114) and a second end portion opposite the first end portion, wherein the second end portion has a stop (116); in the first position the driver (108) is spaced apart from the stop (116) and in the second position the driver (108) contacts the stop (116) to move the actuator (112) axially away from the nozzle portion to move the valve (114) to the open position; and

a plurality of passageways (113) extending longitudinally through the driver (108) configured to allow fuel to flow therethrough, wherein the driver (108) includes an actuator opening (120) extending longitudinally through a central portion of the driver (108), wherein the actuator (112) extends through the actuator opening (120), wherein the driver (108) is independently movable from the actuator (112), and wherein the driver (108) and the actuator (112) are fluidicly connected, and wherein the fuel passageways (113) are spaced radially apart from the actuator opening (120) and extends longitudinally through the driver (108).

2. The fuel injector (100, 200) of claim 1 wherein the passageways (113) are helical.

3. The fuel injector (100, 200) of claim 1 wherein the fuel flows through the cavity (126) in the driver (108) as the fuel flows from the base to the nozzle of the injector (100); or the body includes a plurality of ridges configured to allow fuel to flow around the driver (108) within the driver cavity (126).

4. The fuel injector (100, 200) of claim 1, further comprising a biasing member (130) carried by the base portion (104) of the body, wherein the biasing member (130) urges the driver (108) towards the first position, or further comprising a force generator (106) operably coupled to a controller, wherein the force generator (106) induces the movement of the driver (108) between the first and second positions to achieve desired fuel distribution via the valve (114).

5. The fuel injector (100, 200) of claim 1 wherein the driver (108) at least partially gains momentum prior to contacting the actuator (112) to move the valve (114) to the open position.

6. The fuel injector (100, 200) of claim 1 wherein the actuator (112) includes one or more monitoring fibers extending therethrough and operably coupled to the valve (114), wherein the one or more monitoring fibers are configured to detect one or more combustion chamber properties and transmit the one or more combustion chamber properties to a controller.

7. The fuel injector (100, 200) of claim 1 wherein the driver (108) includes curvilinear passageways (113) configured to allow fuel to flow therethrough, or includes a plurality of cavities (126) configured to allow fuel to flow therethrough.

8. The fuel injector (100, 200) of claim 1 further comprising a force generator (106) operably coupled to a controller, wherein the force generator (106) induces the movement of the driver (108) between the first and second positions to achieve desired fuel distribution via the valve (114), and wherein the force generator (106) is a solenoid winding configured to allow fuel to flow over the solenoid winding.

9. The fuel injector (100, 200) of claim 1, wherein a countercurrent heat exchanger is configured to exchange heat from exhaust gases to fuel in the body.

10. The fuel injector (100, 200) of claim 9, further comprising a pressurized storage tank and wherein the countercurrent heat exchanger is configured to preheat fuel from the pressurized storage tank.

**Patentansprüche**

1. Kraftstoffgekühlter Kraftstoffeinspritzer (100, 200), der dazu konfiguriert ist, Kraftstoff in eine Brennkammer einzuspritzen, wobei der Kraftstoffeinspritzer (100, 200) Folgendes umfasst:

einen Körper aufweisend einen Basisabschnitt (104) gegenüber einem Düsenabschnitt (102), worin der Basisabschnitt (104) dazu konfiguriert ist, den Kraftstoff in den Körper aufzunehmen, und der Düsenabschnitt (102) dazu konfiguriert ist, neben der Brennkammer positioniert zu sein;
ein Ventil (114), das vom Düsenabschnitt (102) getragen wird, worin, zum Einspritzen des Kraftstoffs in die Brennkammer, das Ventil (114) zwischen einer geschlossenen Position und einer offenen Position bewegbar ist;
einen Aktor (112), der mit dem Ventil (114) verbunden ist und längs durch den Körper hindurch hin zum Basisabschnitt (104) verläuft;
einen Treiber (108), der vom Körper getragen wird, worin der Treiber (108) einen längs hindurch verlaufenden Hohlraum (126) beinhaltet, und der Aktor (112) bewegbar im Hohlraum (126) positioniert ist und der Treiber (108) zwischen einer ersten Position und einer zweiten Position bewegbar ist, worin, in der ersten Position, der Treiber (108) vom Aktor (112) beabstandet ist und das Ventil (114) berührt und dieses zumindest teilweise in der geschlossenen Position hält und, in der zweiten Position, der Treiber (108) den Aktor (112) bewegt, um das Ventil (114) in die offene Position zu bewegen; worin der Aktor (112) durch den Körper hindurch koaxial innerhalb des Treibers (108) verläuft und ein erstes mit dem Ventil (114) verbundenes Ende und einen zweiten Endabschnitt gegenüber dem ersten Endabschnitt aufweist, worin der zweite Endabschnitt einen Anschlag (116) aufweist; in der ersten Position, der Treiber (108) vom Anschlag (116) beabstandet ist und, in der zweiten Position, der Treiber (108) den Anschlag (116) berührt, um den Aktor (112) axial weg vom Düsenabschnitt zu bewegen, um das Ventil (114) in die offene Position zu bewegen; und

eine Mehrzahl von Durchgängen (113), die längs durch den Treiber (108) hindurch verlaufen, die dazu konfiguriert sind, Kraftstoff hindurchfließen zu lassen, worin der Treiber (108) eine Aktoröffnung (120) beinhaltet, die längs durch einen zentralen Abschnitt des Treibers (108) hindurch verläuft, worin der Aktor (112) durch die Aktoröffnung (120) hindurch verläuft, worin der Treiber (108) vom Aktor (112) unabhängig bewegbar ist und worin der Treiber (108) und der Aktor (112) fluidisch verbunden sind und worin die Kraftstoffdurchgänge (113) von der Aktoröffnung (120) radial beabstandet sind und längs durch den Treiber (108) hindurch verlaufen.

2. Kraftstoffeinspritzer (100, 200) nach Anspruch 1, worin die Durchgänge (113) spiralförmig sind.

3. Kraftstoffeinspritzer (100, 200) nach Anspruch 1, worin der Kraftstoff durch den Hohlraum (126) im Treiber (108) fließt, während der Kraftstoff von der Basis zur Düse des Einspritzers (100) fließt; oder der Körper eine Mehrzahl von Erhebungen beinhaltet, die dazu konfiguriert sind, Kraftstoff um den Treiber (108) herum innerhalb des Treiberhohlraums (126) fließen zu lassen.

4. Kraftstoffeinspritzer (100, 200) nach Anspruch 1, ferner umfassend ein Vorspannungselement (130), das vom Basisabschnitt (104) des Körpers getragen wird, worin das Vorspannungselement (130) den Treiber (108) hin zur ersten Position zwingt, oder ferner umfassend einen Kraftgenerator (106), der funktionsmäßig mit einem Steuergerät verbunden ist, worin der Kraftgenerator (106) die Bewegung des Treibers (108) zwischen der ersten und zweiten Position herbeiführt, um eine gewünschte Kraftstoffverteilung über das Ventil (114) zu erzielen.

5. Kraftstoffeinspritzer (100, 200) nach Anspruch 1, worin der Treiber (108) zumindest teilweise an Schwung gewinnt, vor Berührung des Aktors (112), um das Ventil (114) in die offene Position zu bewegen.

6. Kraftstoffeinspritzer (100, 200) nach Anspruch 1, worin der Aktor (112) eine oder mehrere Überwachungsfasern beinhaltet, die hindurch verlaufen und funktionsmäßig mit dem Ventil (114) verbunden sind, worin die eine oder mehreren Überwachungsfasern dazu konfiguriert sind, eine oder mehrere Brennkammereigenschaften festzustellen und die eine oder mehreren Brennkammereigenschaften an ein Steuergerät zu übertragen.

7. Kraftstoffeinspritzer (100, 200) nach Anspruch 1, worin der Treiber (108) kurvenförmige Durchgänge (113) beinhaltet, die dazu konfiguriert sind, Kraftstoff hindurchfließen zu lassen, oder eine Mehrzahl von Hohlräumen (126) beinhaltet, die dazu konfiguriert sind, Kraftstoff hindurchfließen zu lassen.

8. Kraftstoffeinspritzer (100, 200) nach Anspruch 1, ferner umfassend einen Kraftgenerator (106), der funktionsmäßig mit einem Steuergerät verbunden ist, worin der Kraftgenerator (106) die Bewegung des Treibers (108) zwischen der ersten und zweiten Position herbeiführt, um eine gewünschte Kraftstoffverteilung über das Ventil (114) zu erzielen, und worin der Kraftgenerator (106) eine Solenoidwicklung ist, die dazu konfiguriert ist, Kraftstoff über die Solenoidwicklung fließen zu lassen.

9. Kraftstoffeinspritzer (100, 200) nach Anspruch 1, worin ein Gegenstromwärmetauscher dazu konfiguriert ist, Wärme von Abgasen mit dem Kraftstoff im Körper auszutauschen.

10. Kraftstoffeinspritzer (100, 200) nach Anspruch 9, ferner umfassend einen Druckspeichertank und worin der Gegenstromwärmetauscher dazu konfiguriert ist, Kraftstoff aus dem Druckspeichertank vorzuwärmen.

**Revendications**

1. Injecteur de carburant refroidi par carburant (100, 200) conçu pour injecter du carburant dans une chambre de combustion, l'injecteur de carburant (100, 200) comprenant :

un corps ayant une partie base (104) opposée à une partie buse (102), dans lequel la partie base (104) est conçue pour recevoir le carburant dans le corps, et la partie buse (102) est conçue pour être positionnée adjacente à la chambre de combustion ;

une valve (114) solidaire de la partie buse (102), la valve (114) étant mobile entre une position fermée et une position ouverte afin d'injecter le carburant dans la chambre de combustion ;

un actionneur (112) accouplé à la valve (114) et s'étendant longitudinalement dans le corps vers la partie base (104) ;

une commande (108) solidaire du corps, la commande (108) comprenant une cavité (126) s'étendant longitudinalement dans la commande, l'actionneur (112) étant positionné de façon mobile dans la cavité (126), et la commande (108) étant mobile entre une première position et une seconde position, de telle sorte que dans la première position la commande (108) soit espacée de l'actionneur (112) et soit en contact avec la valve (114) et la retienne au moins en partie dans la position fermée, et de telle sorte que dans la seconde position, la commande (108) déplace l'actionneur (112) de manière à déplacer la valve (114) dans la position ouverte ;

l'actionneur (112) s'étendant coaxialement dans le corps à l'intérieur de la commande (108) et comprenant une première extrémité accouplée à la valve (114) et une seconde extrémité opposée à la première extrémité, la seconde extrémité étant munie d'une butée (116) ; de telle sorte que dans la première position la commande (108) soit espacée de la butée (116), et dans la seconde position la commande (108) soit en contact avec la butée (116) pour déplacer axialement l'actionneur (112) à l'opposé de la partie buse de manière à déplacer la valve (114) dans la position ouverte ; et

une pluralité de passages (113) s'étendant longitudinalement dans la commande (108) et conçus pour permettre au carburant de s'y écouler, la commande (108) comprenant une ouverture d'actionneur (120) s'étendant longitudinalement dans une partie centrale de la commande (108), l'actionneur (112) s'étendant dans l'ouverture d'actionneur (120), la commande (108) étant indépendamment mobile par rapport à l'actionneur (112), la commande (108) et l'actionneur (112) étant fluidiquement connectés, et les passages de carburant (113) étant espacés radialement de l'ouverture d'actionneur (120) et s'étendant longitudinalement dans la commande (108).

2. Injecteur de carburant (100, 200) selon la revendication 1, dans lequel les passages (113) sont hélicoïdaux.

3. Injecteur de carburant (100, 200) selon la revendication 1, dans lequel le carburant s'écoule à travers la cavité (126) dans la commande (108) quand le carburant s'écoule de la base à la buse de l'injecteur (100) ; ou le corps comprend une pluralité de crêtes conçues pour permettre au carburant de s'écouler autour de la commande (108) à l'intérieur de la cavité (126) de la commande.

4. Injecteur de carburant (100, 200) selon la revendication 1, comprenant en outre un élément de sollicitation (130) solidaire de la partie base (104) du corps, l'élément de sollicitation (130) poussant la commande (108) vers la première position, ou comprenant en outre un générateur de force (106) accouplé de manière fonctionnelle à un contrôleur, le générateur de force (106) induisant le déplacement de la commande (108) entre la première et la seconde position afin d'obtenir la distribution de carburant souhaitée via la valve (114).

5. Injecteur de carburant (100, 200) selon la revendication 1, dans lequel la commande (108) accélère au moins en partie avant d'entrer en contact avec l'actionneur (112) afin de déplacer la valve (114) dans la position ouverte.

6. Injecteur de carburant (100, 200) selon la revendication 1, dans lequel l'actionneur (112) comprend une ou plusieurs fibres de surveillance s'y étendant et accouplées de manière fonctionnelle à la valve (114), la ou les fibres de surveillance étant conçues pour détecter une ou plusieurs propriétés de chambre de combustion et transmettre la ou les propriétés de chambre de combustion à un contrôleur.

7. Injecteur de carburant (100, 200) selon la revendication 1, dans lequel la commande (108) comprend des passages curvilignes (113) conçus pour permettre au carburant d'y circuler, ou comprend une pluralité de cavités (126) conçues pour permettre au carburant d'y circuler.

8. Injecteur de carburant (100, 200) selon la revendication 1, comprenant en outre un générateur de force (106) accouplé de manière fonctionnelle à un contrôleur, le générateur de force (106) induisant le déplacement de la commande (108) entre la première et la seconde position afin d'obtenir la distribution de carburant souhaitée via la valve (114), et le générateur de force (106) est un enroulement de solénoïde conçu pour permettre au carburant de circuler sur l'enroulement de solénoïde.

9. Injecteur de carburant (100, 200) selon la revendication 1, dans lequel un échangeur de chaleur à contre-courant est conçu pour échanger de la chaleur entre des gaz d'échappement et le carburant dans le corps.

10. Injecteur de carburant (100, 200) selon la revendication 9, comprenant en outre un réservoir de stockage pressurisé et dans lequel l'échangeur de chaleur à contre-courant est conçu pour préchauffer le carburant du réservoir de stockage pressurisé.

110a

126a

114a

124a

112a

122a

116a

117a

123a

107a

104a

119a

121a

120a

118a

*Fig. 1A*

**Fig. 1B**

**Fig. 2**

Fig. 3A

Fig. 3B

Fig. 3C

*Fig. 4*

Fig. 5

*Fig. 6*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61237425 A
- US 61237466 A
- US 61237479 A
- US 58182509 A
- US 65308509 A
- US 0967044 W
- US 61304403 A
- US 61312100 A
- US 4984549 A
- US 20060238068 A
- US 4122816 A
- US 12653085 B
- US 4774914 A
- US 5076223 A
- US 4677960 A
- US 4760820 A
- US 5377633 A